# EUROPÄISCHE PATENTSCHRIFT

(11) **EP 3 967 637 B1**
(45) Veröffentlichungstag und Bekanntmachung des Hinweises auf die Patenterteilung: **29.11.2023**
(21) Anmeldenummer: 20196066.3
(22) Anmeldetag: 14.09.2020
(51) Int. Cl.: B65H 19/18

(54) **VORRICHTUNG UND VERFAHREN ZUM SPLEISSEN UND KONTINUIERLICHEN BEREITSTELLEN EINER FOLIENBAHN**
DEVICE AND METHOD FOR SPLICING AND CONTINUOUSLY PROVIDING A FILM SHEET
DISPOSITIF ET PROCÉDÉ D'ÉPISSURAGE ET DE FOURNITURE CONTINUE D'UNE BANDE CONTINUE DE FEUILLE

(43) Veröffentlichungstag der Anmeldung: 16.03.2022
(73) Patentinhaber: Harro Höfliger Verpackungsmaschinen GmbH, 71573 Allmersbach im Tal (DE)
(72) Erfinder: Thienst, Andreas, 71573 Allmersbach im Tal (DE); Walker, Tim, 71573 Allmersbach im Tal (DE)
(74) Vertreter: Zurhorst, Stefan

(56) Entgegenhaltungen:
- EP-A1- 2 103 525
- EP-A2- 0 847 948
- EP-A2- 2 390 212
- EP-B1- 0 847 948
- EP-B1- 2 103 525
- EP-B1- 2 390 212

## Beschreibung

Die Erfindung betrifft eine Vorrichtung und ein Verfahren zum Spleißen und kontinuierlichen Bereitstellen einer Folienbahn.

In vielfältigen Anwendungsbereichen werden Folienbahnen quasi als Endlosmaterial verarbeitet und dazu von einer Vorratsrolle abgezogen. Bei kontinuierlichen Prozessen, bei denen es auf eine kontinuierliche Zufuhr einer solchen Folienbahn ankommt, muss eine Lösung bereitgehalten werden für den Fall, dass eine Vorratsrolle zur Neige geht und gegen eine andere Vorratsrolle zu ersetzen ist.

Eine beispielsweise aus EP 0 847 948 A2 bekannte Vorrichtung, gemäß dem Oberbegriff des Anspruchs 1, und Methode beinhaltet das Spleißen der alten, zur Neige gehenden Folienbahn mit der Folienbahn einer neu hinzugefügten Rolle. Hierbei wird das Ende der ausgehenden Folienbahn derart mit dem Anfang einer neuen eingehenden Folienbahn verbunden, dass eine quasi durchgehende Folienbahn entsteht. Diese kann einschließlich der Spleißstelle in die nachgeschaltete Maschine eingespeist werden.

Ein besonderer Anwendungsfall ist die Herstellung von gefüllten Folienverpackungen aus wasserlöslicher Folie. Hierzu wird eine Folienbahn durch eine Maschine geführt, in der sie zur Bildung von Aufnahmekavitäten tiefgezogen wird. Die Aufnahmekavitäten werden mit einem Produkt beispielsweise in Form von Wasch- oder Spülmitteln befüllt und anschließend mit einer Deckfolie dicht abgesiegelt. Schließlich werden die verschiedenen abgesiegelten Kavitäten durch Schnitte derart vereinzelt, dass Portionspackungen beispielsweise für die Anwendung in Spül- oder Waschmaschinen entstehen. Eine solche Portionspackung kann in die entsprechende Maschine eingelegt werden, wobei sich die Folie bei Kontakt mit dem Spülwasser auflöst und den Inhalt freigibt.

Derweil das vorgenannte Prinzip an sich schon länger bekannt ist, kommen in jüngerer Zeit vermehrt kontinuierliche Prozesse zum Einsatz, in denen die wasserlösliche Folie kontinuierlich, also nicht getaktet durch die Maschine transportiert wird. Das gelegentlich erforderlich werdende Verspleißen wird manuell durchgeführt. Hierzu werden nach dem Stand der Technik die Endabschnitte der neuen und/oder der alten Folienbahn befeuchtet und aneinander gedrückt, wodurch beide aneinander gesiegelt werden. Beidseitig der Siegelstelle verbleiben lose Endfahnen, die manuell mit Klebeband gesichert werden. Die solchermaßen erzeugte Spleißstelle kann zwar kontinuierlich und unterbrechungsfrei in die nachfolgende Maschine eingespeist werden. Ein qualitativ hochwertiger Tiefzieh- und Versiegelungsvorgang ist in diesem Bereich jedoch nicht möglich. In Konsequenz muss im Bereich der Spleißstelle die Füllung der Kavitäten unterbrochen werden, da die Füllung der sonst hier entstehenden undichten Verpackungseinheiten austreten und die Maschine verschmutzen würden.

Im Anschluss an den teilweise ausgesetzten Füllvorgang folgt der Vereinzelungsvorgang, wobei Längs- und Querschnitte ohne Verwendung eines Schneidgitters kontinuierlich durchgeführt werden. Anders als das Befüllen kann das Schneiden nicht unterbrochen werden, da sonst die Verpackungseinheiten mit oder ohne Füllung nicht aus der Maschine entnommen werden können. Die Spleißstelle wird also ebenso wie die mit dem Produkt gefüllten Folienbahnen geschnitten, was zu zahlreichen Schwierigkeiten führt. Insbesondere die losen und mit Klebeband gesicherten Endfahnen des Spleißbereiches bilden nach dem Schnitt lose Folienschnipsel, welche sich unkontrolliert in der Maschine ausbreiten und zu Verstopfungen und anderen Prozessstörungen bis hin zum Maschinenstillstand führen können.

Der Erfindung liegt als Aufgabe die Schaffung einer Vorrichtung zum Spleißen und kontinuierlichen Bereitstellen einer ausgehenden Folienbahn zugrunde, welche die vorgenannten Probleme vermeidet.

Diese Aufgabe wird durch eine Vorrichtung mit den Merkmalen des Anspruchs 1 gelöst.

Der Erfindung liegt des Weiteren die Aufgabe zugrunde, ein Verfahren zum Betrieb einer solchen Vorrichtung anzugeben, welches ein problemloses Schneiden der Folienbahn insbesondere im Bereich der Spleißstelle ermöglicht.

Diese Aufgabe wird durch ein Verfahren mit den Merkmalen des Anspruchs 8 gelöst.

Nach der Erfindung ist eine Vorrichtung zum Spleißen und kontinuierlichen Bereitstellen einer ausgehenden Folienbahn vorgesehen, welche eine erste Folienzufuhr zum Einspeisen einer ersten eingehenden Folienbahn, eine zweite Folienzufuhr zum Einspeisen einer zweiten eingehenden Folienbahn, eine Spleißeinheit zum Verspleißen der ersten oder der zweiten eingehenden Folienbahn mit der ausgehenden Folienbahn, sowie eine Klemmeinheit und einen der Klemmeinheit nachgeschalteten Folienzwischenspeicher für die ausgehende Folienbahn umfasst. Die Spleißeinheit umfasst eine erste Siegelbacke mit einer ersten Haltevorrichtung für die ausgehende Folienbahn sowie eine erste Schneidvorrichtung zum Abtrennen der ausgehenden Folienbahn im Bereich der ersten Siegelbacke. Des Weiteren umfasst die Spleißeinheit eine zweite Siegelbacke mit einer zweiten Haltevorrichtung wechselseitig für die erste oder die zweite eingehende Folienbahn sowie eine zweite Schneidvorrichtung zum Abtrennen der ersten oder der zweiten Folienbahn. Die erste Siegelbacke mit der ersten Haltevorrichtung und die zweite Siegelbacke mit der zweiten Haltevorrichtung sind relativ zueinander aus dem Wirkungsbereich ihrer ersten und zweiten Schneidvorrichtungen heraus in ihren gegenseitigen Wirkungsbereich verfahrbar.

Im zugehörigen erfindungsgemäßen Verfahren wird zunächst im gewöhnlichen Betrieb eine der beiden eingehenden Folienbahnen kontinuierlich als ausgehende Folienbahn durch den Folienzwischenspeicher hindurch aus der Vorrichtung herausgeführt. In diesem gewöhnlichen Betrieb stellt der Folienzwischenspeicher lediglich eine Durchgangsstation dar und hat im Übrigen keine Funktion.

Sobald erkannt wird, dass diese eine der beiden eingehenden Folienbahnen, aus welcher sich die ausgehende Folienbahn speist, zur Neige geht, wird die ausgehende Folienbahn mittels der Klemmeinheit fixiert und ausgangsseitig der Klemmeinheit durch Entnahme aus dem Folienzwischenspeicher aus der Vorrichtung herausgeführt. Hierdurch wird die Folienzufuhr auf der Eingangsseite der Klemmeinheit unterbrochen. Auf der Ausgangsseite der Klemmeinheit kann die Folienzufuhr bzw. Folienausgabe kontinuierlich weiter erfolgen, indem die dazu erforderliche Folienmenge aus dem Folienzwischenspeicher abgezogen wird. Die Kapazität des Folienzwischenspeichers ist für den Betrieb innerhalb eines Zeitintervalls ausgelegt, welches für den nachfolgend beschriebenen Spleißvorgang ausreicht:

Auf der Eingangsseite der Klemmeinheit wird nun die ausgehende Folienbahn mittels der ersten Haltevorrichtung an der ersten Siegelbacke gehalten und mittels der ersten Schneidvorrichtung im Bereich der ersten Siegelbacke abgetrennt. Die andere der beiden eingehenden Folienbahnen, also die neu hinzugekommene eingehende Folienbahn wird mittels der zweiten Haltevorrichtung an der zweiten Siegelbacke gehalten und mittels der zweiten Schneidvorrichtung im Bereich der zweiten Siegelbacke abgetrennt. Hierdurch wird erreicht, dass an beiden Siegelbacken nur so viel Folienmaterial verbleibt, wie es für den späteren Siegelvorgang erforderlich ist. Folienüberstände werden vollständig oder bis auf einen technisch unbedeutenden Rest vermieden.

Die erste Siegelbacke mit der an der ersten Haltevorrichtung gehaltenen und abgetrennten ausgehenden Folienbahn sowie die zweite Siegelbacke mit der an der zweiten Haltevorrichtung gehaltenen und abgetrennten zweiten oder ersten eingehenden Folienbahn werden nun relativ zueinander aus dem Wirkungsbereich ihrer ersten bzw. zweiten Schneidvorrichtungen heraus in ihren gegenseitigen Wirkungsbereich verfahren. Die abgetrennte zweite oder erste eingehenden Folienbahn wird nachfolgend an die abgetrennte ausgehende Folienbahn mittels der zusammenwirkenden Siegelbacken angespleißt. Die Klemmeinheit wird schließlich wieder geöffnet, und der gewöhnliche Betrieb wird mit der gespleißten ausgehenden Folienbahn fortgesetzt.

Die Verwendung von zwei relativ zueinander beweglichen Siegelbacken zusammen mit den zugehörigen Haltevorrichtungen erlaubt in einer ersten Relativposition das maßgenaue Abschneiden der Folienbahnen unter Vermeidung von Überstand. In der zweiten Relativposition erfolgt schließlich das Verspleißen durch Zusammensiegeln der beiden Folienbahnen, wobei sich der Spleißbereich auf den unmittelbaren Siegelbereich beschränkt. Die solchermaßen gespleißte Folienbahn führt in der nachfolgenden Maschine zu einem nur sehr kleinen Störbereich von der Breite der tatsächlichen Siegelung, ohne dass überstehende Folienabschnitte diesen Störbereich unnötig vergrößern. Das Fehlen von überstehenden Folienendabschnitten verhindert die Bildung von losen Schnipseln beim abschließenden Schneiden. Störeinflüsse oder sogar Stillstandszeiten an der Maschine sind zuverlässig vermieden.

Die Vorteile der Erfindung kommen insbesondere dann zum Tragen, wenn die ausgehende Folienbahn und die beiden eingehenden Folienbahnen wasserlöslich und insbesondere aus PVOH (Polyvinylalkohol) sind, und wenn die ausgehende wasserlösliche Folienbahn einer insbesondere kontinuierlich arbeitenden Maschine zur Herstellung gefüllter wasserlöslicher Beutel zugeführt wird.

Für die vorstehend beschriebene Relativbewegung der beiden Siegelbacken mit ihren Haltevorrichtungen kann eine bewegliche Lagerung gegenüber dem Vorrichtungsgestell für beide oder nur für eine davon zweckmäßig sein. In bevorzugter Weiterbildung sind jedoch die erste Siegelbacke mit der ersten Haltevorrichtung und die zweite Schneidvorrichtung wechselseitig in den Wirkungsbereich der zweiten Siegelbacke mit der zweiten Haltevorrichtung verfahrbar. Die zweite Siegelbacke bleibt also zusammen mit ihrer Haltevorrichtung im Wesentlichen an Ort und Stelle, während je nach Verfahrensschritt entweder die zweite Schneidvorrichtung oder die mit der ausgehenden Folie bestückte erste Siegelbacke herangefahren wird. Bei geringem mechanischem Aufwand ist eine hohe Positioniergenauigkeit erzielbar.

In einer bevorzugten Ausführungsform weist die Spleißeinheit einen ersten Vorbereitungstisch für die erste eingehende Folienbahn sowie einen zweiten Vorbereitungstisch für die zweite eingehende Folienbahn auf, wobei der erste und der zweite Vorbereitungstisch zwischen einer aktiven Betriebsposition und einer passiven Vorbereitungsposition hin und her verfahrbar sind. Der erste und der zweite Vorbereitungstisch weisen jeweils eine Haltevorrichtung für einen freien Endabschnitt der ersten oder der zweiten eingehenden Folienbahn sowie einen Trennbereich zum Abtrennen des jeweiligen freien Endabschnitts auf. Im Trennbereich des einen der beiden Vorbereitungstische ist die zweite Schneidvorrichtung angeordnet, während im Trennbereich des anderen der beiden Vorbereitungstische ein Gegenhalter für die zweite Schneidvorrichtung sowie, angrenzend daran, die zweite Siegelbacke mit der zweiten Haltevorrichtung angeordnet sind.

Die Hin- und Her-Verschiebbarkeit der Vorbereitungstische erlaubt für die Vorbereitung des Spleißvorganges einen Positionswechsel derart, dass in der Vorbereitungsposition ein ausreichender Sicherheitsabstand zur Betriebsposition gegeben ist. Eine neue Folienbahn kann ohne Störung des laufenden Prozesses eingezogen und in geeigneter Vorbereitungsposition am Vorbereitungstisch fixiert werden. Nach dem Zurückfahren in die aktive Betriebsposition ist alles vorbereitet für den eigentlichen Beginn des Spleißvorganges. Der Spleißvorgang selbst kann dann sehr schnell innerhalb weniger Sekunden durchgeführt werden, ohne dass der Folienvorrat im Folienzwischenspeicher aufgebraucht wird. In den beiden Trennbereichen der Vorbereitungstische liegen Schneidvorrichtung und Gegenhalter einsatzfertig unmittelbar einander gegenüber, so dass der Trennschnitt ohne Verzögerung durchgeführt und unmittelbar von einem Siegelvorgang gefolgt werden kann.

In zweckmäßiger Weiterbildung ist die Haltevorrichtung für den freien Endabschnitt gegen eine Federvorspannung relativ zum Trennbereich des Vorbereitungstisches verschiebbar. Hierdurch werden mehrere Ziele erreicht. Zum einen wird das geklemmte Folienende unter Spannung gehalten, so dass Falten- oder Sackbildungen vermieden sind. Zum anderen kann die Federvorspannung dafür genutzt werden, dass der beim Spleißvorgang abgetrennte Endabschnitt abgezogen und folglich zuverlässig vom Siegelbereich ferngehalten wird. Darüber hinaus kann über die Verschiebbarkeit insbesondere im Zusammenhang mit einem geeigneten Sensor überwacht werden, dass tatsächlich Folie vorhanden ist und für einen eventuellen Spleißvorgang bereit steht.

In einer vorteilhaften Ausführungsform sind die Vorbereitungstische horizontal verschiebbar gelagert, während die erste Siegelbacke mit der ersten Haltevorrichtung vertikal verschiebbar gelagert ist. Hierdurch ergibt sich eine einfache Bewegungskinematik, die einerseits den Wechsel zwischen aktiver Betriebsposition und passiver Vorbereitungsposition ermöglicht, und die andererseits eine einfache Umpositionierung für den Vorgang des Siegelns erlaubt.

Für die erste bzw. die zweite Schneidvorrichtung kommen geeignete Messersysteme in Betracht. Bevorzugt sind die erste und/oder die zweite Schneidvorrichtung durch einen Heizdraht gebildet. Insbesondere in Verbindung mit der schon erwähnten PVOH-Folie lässt sich schnell ein sauberer Trennschnitt erzielen, ohne dass die Schnittkante Gefahr läuft auszufransen.

Für die Ausbildung der Haltevorrichtungen können mechanische Klemmvorrichtungen oder dergleichen zweckmäßig sein. Bevorzugt kommen Vakuumplatten zur Bildung der ersten und/oder der zweiten Haltevorrichtung zum Einsatz. Mittels flächig in solchen Platten verteilter Vakuumbohrungen wird der jeweilige Folienabschnitt flächig und glatt bei hoher Haltekraft angezogen, wobei faltenfreie Siegelflächen ohne Störung beispielsweise durch überstehende mechanische Greifer bereitgestellt werden. Der Siegelvorgang selbst kann in unmittelbarer Nähe erfolgen. Durch eine geeignete pneumatische Steuerung kann die Haltewirkung schnell herbeigeführt und ebenso schnell auch wieder abgeschaltet werden.

Ein Ausführungsbeispiel der Erfindung ist nachfolgend anhand der Zeichnung näher beschrieben. Es zeigen:
- Fig. 1: in einer perspektivischen Darstellung eine erfindungsgemäß ausgeführte Vorrichtung zum Spleißen und kontinuierlichen Bereitstellen einer ausgehenden Folienbahn mit einer Spleißeinheit und mit einem nachgeschalteten Folienzwischenspeicher,
- Fig. 2: in einer teilweise geschnittenen Darstellung die Vorrichtung nach Fig. 1 im Bereich ihrer Spleißeinheit mit einem in seine passive Vorbereitungsposition herausgezogenen Vorbereitungstisch,
- Fig. 3: die Anordnung nach Fig. 2 mit beiden Vorbereitungstischen in ihrer aktiven Betriebsposition und in vorbereitetem Zustand für einen nachfolgenden Spleißvorgang,
- Fig. 4: die Anordnung nach Fig. 3 zu Beginn des Spleißvorganges mit abgetrennten Endabschnitten der Folienbahnen,
- Fig. 5: die gleiche Anordnung mit beiseite gefahrener Schneidvorrichtung und mit zusammengefahrenen Siegelbacken und
- Fig. 6: die vorstehende Anordnung in einem Zustand alternativ zur Fig. 2, bei der der andere Vorbereitungstisch in seine passive Vorbereitungsposition gezogen ist.

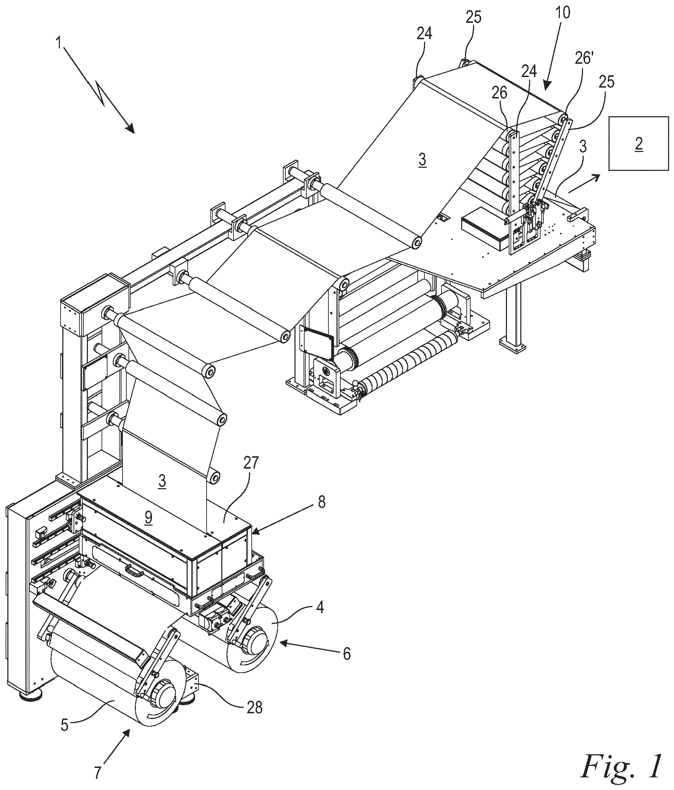

Fig. 1 zeigt in perspektivischer Darstellung eine erfindungsgemäß ausgeführte Vorrichtung 1 zum Spleißen und zum kontinuierlichen Bereitstellen einer ausgehenden Folienbahn 3. Der hier gewählte Begriff der "ausgehenden" Folienbahn 3 bedeutet, dass letztere aus der Vorrichtung 1 kontinuierlich herausgeht und insbesondere einer nachgeordneten Maschine 2 zugeführt wird.

Die nachgeordnete Maschine 2 ist im vorliegenden Anwendungsfall an sich bekannt und deshalb nur als Blocksymbol dargestellt. Es handelt sich hierbei um eine Maschine 2, in welcher aus der Folienbahn 3 in einem kontinuierlichen, also nicht intermittierenden Prozess Einzelportionen von Wasch- oder Spülmitteln mit wasserlöslicher Folienverpackung hergestellt werden. Dementsprechend besteht die hier verarbeitete Folienbahn 3 aus einem wasserlöslichen Material, namentlich aus PVOH. Im Rahmen der Erfindung können aber auch andere Folienmaterialien zum Einsatz kommen und auch andere Produkte damit verpackt werden.

Die Vorrichtung 1 umfasst eine erste Folienzufuhr 6 zum Einspeisen einer ersten eingehenden Folienbahn 4 sowie eine zweite Folienzufuhr 7 zum Einspeisen einer zweiten eingehenden Folienbahn 5, wobei beide eingehenden Folienbahnen 4, 5 in ihrer jeweiligen Folienzufuhr 6, 7 auf Rollen bereit gehalten und von dort in die Vorrichtung 1 eingezogen werden. Auch die beiden eingehenden Folienbahnen 4, 5 bestehen aus PVOH.

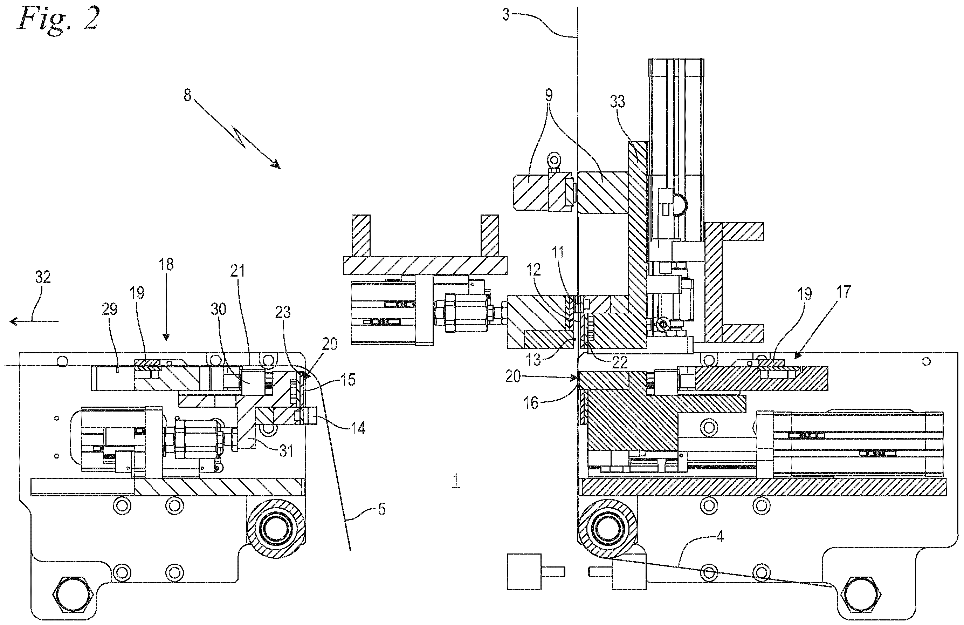

Die Vorrichtung 1 umfasst des Weiteren eine Spleißeinheit 8, eine Klemmeinheit 9 sowie einen Folienzwischenspeicher 10, wobei in der Darstellung nach Fig. 1 die Spleißeinheit 8 und die Klemmeinheit 9 durch ein Gehäuse 27 abgedeckt und deshalb nicht sichtbar sind. Beide sind jedoch nachfolgend in den Fig. 2 bis 6 gezeigt und in diesem Zusammenhang auch näher beschrieben.

Fig. 1 zeigt einen Ausgangszustand, in welchem die erste eingehende Folienbahn 4 durch die Spleißeinheit 8 durchgeführt und als ausgehende Folienbahn 3 hieraus abgezogen wird. Die ausgehende Folienbahn 3 wird über Umlenk- und Spannrollen dem Folienzwischenspeicher 10 zugeführt, welcher in Abzugsrichtung der Klemmeinheit 9 nachgeschaltet ist. Der Folienzwischenspeicher 10 ist im gezeigten Ausführungsbeispiel als sog. "Folientänzer" mit einem Paar von feststehenden Armen 24, mit einem Paar von Schwenkarmen 25 sowie mit einer Reihe von daran befestigten Rollen 26, 26' ausgebildet. Die ausgehende Folienbahn 3 wird abwechselnd um Rollen 26 der feststehenden Arme 24 sowie um Rollen 26' der Schwenkarme 25 herumgeführt und nimmt dabei einen zickzackförmigen Verlauf an. Das Paar von Schwenkarmen 25 hält dessen Rollen 26' in einem größtmöglichen Abstand zu den Rollen 26 der feststehenden Arme 24, so dass sich eine bestimmte Menge der ausgehenden Folienbahn 3 im Folientänzer bzw. in dem Folienzwischenspeicher 10 befindet.

Im gewöhnlichen Betrieb wird die ausgehende Folienbahn 3 einfach nur durch den Folienzwischenspeicher 10 hindurch zur Maschine 2 abgezogen, ohne dass sich die im Folienzwischenspeicher 10 befindliche Folienmenge ändert. Sobald jedoch die weiter unten näher beschriebene Klemmeinheit 9 aktiviert wird und die ausgehende Folienbahn 3 nahe der Spleißeinheit 8 fixiert, kann für einen begrenzten Zeitraum eine begrenzte Menge der ausgehenden Folienbahn 3 weiterhin der Maschine 2 zugeführt werden. Hierbei wird die ausgehende Folienbahn 3 aus dem Folienzwischenspeicher 10 entnommen und aus der Vorrichtung 1 zur Maschine 2 hin herausgeführt. Während der Entnahme führt das Paar von Schwenkarmen 25 eine Schwenkbewegung derart aus, dass sich der Abstand der zugeordneten Rollen 26" zu den Rollen 26 der feststehenden Arme 24 verringert, so dass eine entsprechende Menge der ausgehenden Folienbahn 3 trotz aktivierter Klemmeinheit 9 frei wird und zur Verfügung steht. Der Folienzwischenspeicher 10 ist für eine Entnahmedauer ausgelegt, die für die Durchführung des nachfolgend beschriebenen Spleißvorganges ausreicht. Im gezeigten Ausführungsbeispiel liegt hier eine Entnahmedauer von etwa zehn Sekunden zugrunde. Nach erfolgter Spleißung wird jedenfalls die Klemmeinheit 9 wieder gelöst, so dass die ausgehende Folienbahn 3 wieder wie zuvor abgezogen werden kann. Gleichzeig kann auch das Paar von Schwenkarmen 25 langsam wieder in die gezeigte Ausgangslage zurückgeschwenkt werden, womit der Folienzwischenspeicher 10 für einen nächsten Spleißvorgang gefüllt wird.

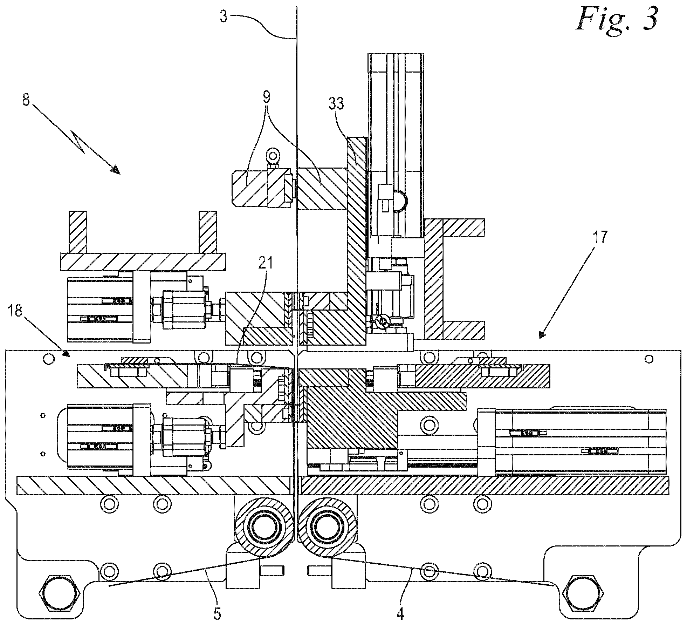

Während des gewöhnlichen Betriebes geht irgendwann die Rolle mit der ersten eingehenden Folienbahn 4 zur Neige. Rechtzeitig vorher wird in der zweiten Folienzufuhr 7 eine Rolle mit der zweiten eingehenden Folienbahn 5 bereitgestellt. Diese ist hier bereits in einem eingezogenen Zustand nach Fig. 3 gezeigt und kann zu einem geeigneten Zeitpunkt an ein freies Ende der ausgehenden Folienbahn 3 angespleißt werden. Sobald dies geschehen ist, wird fortan die zweite eingehende Folienbahn 5 als ausgehende Folienbahn 3 abgezogen und der Verarbeitung in der Maschine 2 zugeführt. Im Wechsel dient dann die erste Folienzufuhr 6 mit einer neuen Rolle der ersten eingehenden Folienbahn 4 als Vorrat dafür, um bei aufgebrauchter zweiter eingehender Folienbahn 5 an die ausgehende Folienbahn 3 angespleißt zu werden. Durch wechselseitiges Anspleißen der ersten oder der zweiten eingehenden Folienbahn 4, 5 kann eine kontinuierliche ausgehende Folienbahn 3 unterbrechungsfrei bereitgestellt, abgezogen und der nachgeschalteten Maschine 2 zugeführt werden.

Der Füllzustand der beiden Rollen mit den ersten bzw. zweiten eingehenden Folienbahnen 4, 5 wird im gezeigten Ausführungsbeispiel durch ein Gerät zur Rollendurchmesser-Erkennung 28 überwacht, so dass bei Unterschreiten eines bestimmten Mindestdurchmessers der bald erforderlich werdende Spleißvorgang vorbereitet und eingeleitet werden kann.

Fig. 2 zeigt in einer teilweise geschnittenen Ansicht den Bereich der Spleißeinheit 8 der Vorrichtung 1 nach Fig. 1, wobei hier und auch in den nachfolgenden Figuren das Gehäuse 27 nach Fig. 1 für eine bessere Übersicht nicht dargestellt ist. Um den Ausgangszustand nach Fig. 1 zu erreichen, sind vorbereitende Tätigkeiten auszuführen, welche nachfolgend insbesondere unter Bezug auf Fig. 2 näher beschrieben sind:
Gemäß der rechten Seite von Fig. 2 wird die erste eingehende Folienbahn 4 von der ersten Folienzufuhr 6 (Fig. 1) kommend um eine Umlenkrolle herum vertikal nach oben umgelenkt und von unten nach oben durch die Spleißeinheit 8 hindurchgeführt. Dort tritt sie nach oben als ausgehende Folienbahn 3 aus und passiert anschließend eine der Spleißeinheit 8 nachgeschaltete Klemmeinheit 9. Weder die Spleißeinheit 8 noch die Klemmeinheit 9 sind in diesem Zustand aktiviert, so dass die ausgehende Folienbahn 3 kontinuierlich aus der eingehenden Folienbahn 4 gespeist und entsprechend der Darstellung nach Fig. 1 kontinuierlich abgezogen werden kann.

Die Vorrichtung 1 umfasst als Teil der Spleißeinheit 8 einen ersten Vorbereitungstisch 17 für die erste eingehende Folienbahn 4 sowie einen zweiten Vorbereitungstisch 18 für die zweite eingehende Folienbahn 5. Ein weiterer Teil der Spleißeinheit 8 findet sich oberhalb der beiden Vorbereitungstische 17, 18 und umfasst eine erste Siegelbacke 11 mit einer ersten Haltevorrichtung 12 für die ausgehende Folienbahn 3 sowie eine erste Schneidvorrichtung 13 zum Abtrennen der ausgehenden Folienbahn 3 im Bereich der ersten Siegelbacke 11. Rechts der ausgehenden Folienbahn 3 befinden sich die erste Siegelbacke 11 und unmittelbar darunter, also eingangsseitig davon, die erste Haltevorrichtung 12 für die ausgehende Folienbahn 3. Bei der ersten Haltevorrichtung 12 handelt es sich um eine Vakuumplatte, welche über ein Lochraster von Vakuumbohrungen bei entsprechender Vakuumbeaufschlagung die ausgehende Folienbahn 3 anziehen und halten kann. Wiederum unmittelbar darunter, also eingangsseitig davon, befindet sich ein Gegenhalter 22 für die erste, hier als Heizdraht ausgeführte Schneidvorrichtung 13, welche ihrerseits gegenüberliegend auf der anderen, also hier linken Seite der ausgehenden Folienbahn 3 positioniert ist. Die erste Siegelbacke 11, die erste Haltevorrichtung 12 sowie die erste Schneidvorrichtung 13 einschließlich ihres zugeordneten Gegenhalters 22 erstrecken sich über die gesamte Breite der ausgehenden Folienbahn 3, was übrigens gleichermaßen auch für die darüber befindliche Klemmeinheit 9 zutrifft. Eine konstruktive Besonderheit besteht noch darin, dass sich die erste Siegelbacke 11 und die erste Haltevorrichtung 12 auf einem Träger 33 befinden und gemeinsam mit diesem und der ebenfalls daran befestigten Klemmeinheit 9 auf einer Linearführung vertikal verfahrbar sind.

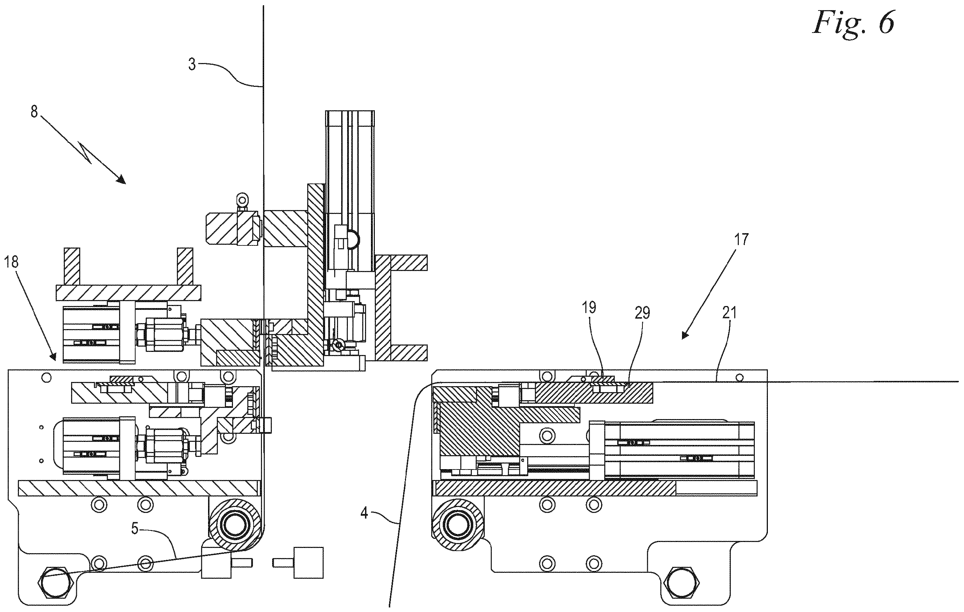

Bis auf nachfolgend näher beschriebene Unterschiede sind die beiden Vorbereitungstische 17, 18 spiegelsymmetrisch zueinander und ansonsten gleich ausgeführt. Der erste Vorbereitungstisch 17 und der zweite Vorbereitungstisch 18 sind zwischen einer aktiven Betriebsposition und einer passiven Vorbereitungsposition in horizontaler Richtung hin und her verfahrbar. In Fig. 3 haben beide Vorbereitungstische 17, 18 ihre aktive Betriebsposition eingenommen, in welcher sie unmittelbar nebeneinander liegen. In der Darstellung nach Fig. 2 ist der linke, zweite Vorbereitungstisch 18 nach links in seine passive Vorbereitungsposition verschoben, während der rechte, erste Vorbereitungstisch 17 in seiner aktiven Betriebsposition belassen ist. Der umgekehrte Fall ist in Fig. 6 dargestellt: Dort ist der rechte, erste Vorbereitungstisch 17 nach rechts in seine passive Vorbereitungsposition verschoben, während der linke, zweite Vorbereitungstisch 18 seine aktive Betriebsposition beibehalten hat.

Beide Vorbereitungstische 17, 18 weisen jeweils eine Haltevorrichtung 19 für einen freien Endabschnitt 21 der ersten bzw. der zweiten eingehenden Folienbahn 4, 5 sowie einen Trennbereich 20 zum Abtrennen dieses jeweiligen freien Endabschnitts 21 auf. Die Trennbereiche 20 der beiden Vorbereitungstische 17, 18 liegen sich unmittelbar gegenüber. Hier werden die beiden eingehenden Folienbahnen 4, 5 im Wesentlichen vertikal geführt.

In der passiven Vorbereitungsposition nach Fig. 2 wird als vorbereitende Maßnahme für einen späteren Spleißvorgang der freie Endabschnitt 21 der zweiten eingehenden Folienbahn 5 aus der ersten Folienzufuhr 6 (Fig. 1) abgezogen, am Trennbereich 20 des zweiten Vorbereitungstisches 18 vorbei nach oben gezogen, dann horizontal nach links durch die Haltevorrichtung 19 hindurchgeführt und schließlich in der Haltevorrichtung 19, welche hier aus zwei Klemmwangen besteht, fixiert. Ausgangsseitig der Haltevorrichtung 19 befindet sich noch eine quer über die gesamte Folienbreite verlaufende Schneidnut 29. Durch die Schneidnut 29 kann ein Messer gezogen werden, um ein überstehendes Ende des Endabschnitts 21 abzuschneiden.

Die Haltevorrichtung 19 ist relativ zu einem Grundkörper 31 des Vorbereitungstisches 18 gegen eine Federvorspannung horizontal verschiebbar, wobei die Federvorspannung in Richtung eines Pfeiles 32 vom Trennbereich 20 fortweisend auf die Haltevorrichtung 19 einwirkt. Der in der Haltevorrichtung 19 eingeklemmte Endabschnitt 21 wird also vom Trennbereich 20 fortgezogen. Sobald der freie Endabschnitt 21 in der Haltevorrichtung 19 eingeklemmt ist, wird die zweite eingehende Folienbahn 5 zurück auf die Folienrolle der zweiten Folienzufuhr 7 soweit aufgerollt, bis sich an der Haltevorrichtung 19 eine ausreichend hohe Federspannung bzw. ein ausreichend großer Federweg eingestellt hat. Federkraft und/oder Federweg können durch einen optionalen Sensor 30 erfasst werden, welcher bei Erreichen des gewünschten Zielwertes ein geeignetes Signal generiert und damit anzeigt, dass die gewünschte Vorspannung im Endabschnitt 21 erreicht ist. Da ohne diesen Endabschnitt 21 keine solche Vorspannung generiert werden kann, ist der Sensor 30 auch zur Überwachung für das Vorhandensein des Endabschnittes 21 einsetzbar.

Weitere konstruktive Einzelheiten der beiden Vorbereitungstische 17, 18 lassen sich noch wie folgt beschreiben: Die Vorbereitungstische 17, 18 sind unter anderem mit einer zweiten Siegelbacke 14, einer zweiten Haltevorrichtung 15 und einer zweiten Schneidvorrichtung 16 versehen. Die Anordnung aus der zweiten Siegelbacke 14, der zweiten Haltevorrichtung 15 und der zweiten Schneidvorrichtung 16 ist im Vergleich zur Anordnung aus erster Siegelbacke 11, erster Haltevorrichtung 12 und erster Schneidvorrichtung 13 um 180° gedreht und ansonsten gleich aufgebaut:
Unterhalb des Trennbereichs 20 des linken, zweiten Vorbereitungstisches 18 befindet sich die zweite Siegelbacke 14, welche sich quer über die gesamte Breite der zweiten eingehenden Folienbahn 5 erstreckt. Darüber, also ausgangsseitig der zweiten Siegelbacke 14 und unmittelbar angrenzend daran, befindet sich die zweite, ebenfalls als Vakuumplatte ausgeführte Haltevorrichtung 15 für die zweite eingehende Folienbahn 5, welche sich ebenfalls über die gesamte Breite derselben erstreckt. Unmittelbar oberhalb der zweiten Haltevorrichtung 15, also unmittelbar ausgangsseitig davon, befindet sich noch ein Gegenhalter 23 für die zweite Schneidvorrichtung 16, welche sich im gegenüberliegenden Trennbereich 20 des benachbarten ersten Vorbereitungstisches 17 befindet. Die zweite Schneidvorrichtung 16 ist auch hier als angedeuteter Heizdraht ausgebildet, welcher sich ebenso wie der gegenüberliegende Gegenhalter 23 über die gesamte Breite der eingehenden Folienbahnen 4, 5 erstreckt. Anders als der zweite Vorbereitungstisch 18 weist der erste Vorbereitungstisch 17 in diesem Bereich weder eine Siegelbacke noch eine Haltevorrichtung auf.

Unter Bezug auf die oben insbesondere im Zusammenhang mit den Fig. 1, 2 beschriebenen körperlichen Merkmale ergibt sich die Funktion der Vorrichtung 1 und der erfindungsgemäße Verfahrensablauf wie folgt: Wie schon im Zusammenhang mit Fig. 1 erwähnt, wird hier beispielhaft die Ausgangssituation zugrunde gelegt, bei der die ausgehende Folienbahn 3 aus der ersten eingehenden Folienbahn 4 kontinuierlich gespeist wird. In Vorbereitung eines sich abzeichnenden Bedarfs an einem Spleißvorgang wird also zunächst, wie oben schon beschrieben, der freie Endabschnitt 21 der zweiten eingehenden Folienbahn 5 in der Haltevorrichtung 19 eingespannt und gegen die zuvor schon beschriebene Federkraft vorgespannt. All dies geschieht in der passiven Vorbereitungsposition des zweiten Vorbereitungstisches 18 gemäß Fig. 2, während die ausgehende Folienbahn 3 von der ersten Folienzufuhr 6 (Fig. 1) mit der ersten eingehenden Folienbahn 4 kontinuierlich und unterbrechungsfrei abgezogen wird.

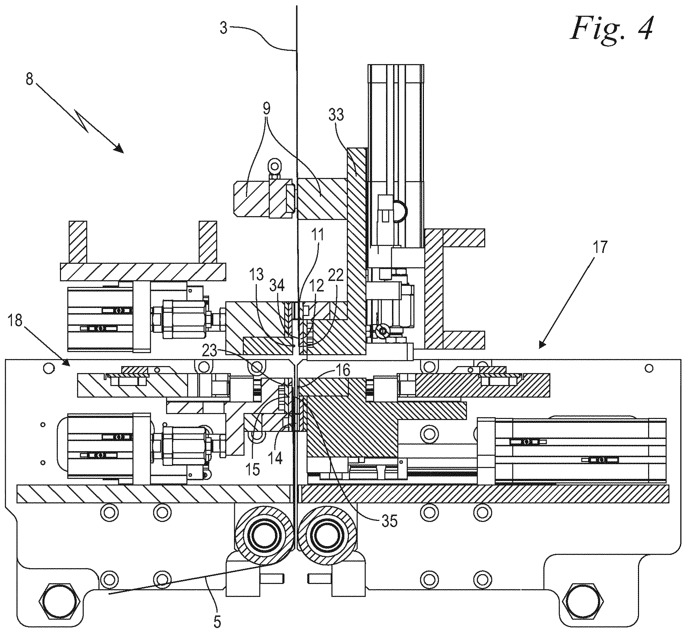

Nach dem Einklemmen und Vorspannen gemäß Fig. 2 wird der zweite Vorbereitungstisch 18 zurück in seine aktive Betriebsposition verfahren, wie es in Fig. 3 dargestellt ist. Im vorbereiteten Zustand nach Fig. 3 kann weiterhin ein gewöhnlicher Betrieb durchgeführt werden, bei dem die ausgehende Folienbahn 3 kontinuierlich abgezogen wird. Sobald jedoch die Rollendurchmesser-Erkennung 28 (Fig. 1) Signal gibt, dass die Folienrolle der ersten Folienzufuhr 6 zur Neige geht, beginnt der eigentliche Spleißvorgang wie folgt:
Zunächst wird gemäß der Darstellung nach Fig. 4 die ausgehende Folienbahn 3 mittels der Klemmeinheit 9 fixiert, indem die Klemmbacken der Klemmeinheit 9 unter Zwischenlage der ausgehenden Folienbahn 3 zusammengefahren werden. Die weitere Folienzufuhr aus der ersten eingehenden Folienbahn 4 ist damit unterbrochen, während entsprechend obiger Beschreibung zu Fig. 1 über einen beschränkten Zeitraum die ausgehende Folienbahn 3 aus dem Folienzwischenspeicher 10 entnommen und der nachgeschalteten Maschine 2 zugeführt wird.

Sobald die ausgehende Folienbahn 3 mittels der Klemmeinheit 9 fixiert ist, kommt die erste Schneidvorrichtung 1 zum Einsatz. Die erste Haltevorrichtung 12 wird mit Vakuum beaufschlagt, so dass die ausgehende Folienbahn 3 unmittelbar eingangsseitig der ersten Siegelbacke 11 entsprechend der Darstellung nach Fig. 4 gehalten wird. Dann wird die ausgehende Folienbahn 3 mittels der ersten Schneidvorrichtung 13 im Bereich der ersten Siegelbacke 11, genauer eingangsseitig der ersten Siegelbacke 11 und eingangsseitig der ersten Haltevorrichtung 12 entlang ihrer gesamten Breite abgetrennt, indem die Schneidvorrichtung 13 in Form des Heizdrahtes aufgeheizt und unter Zwischenlage der ausgehenden Folienbahn 3 gegen den Gegenhalter 22 gedrückt wird. Der darunter befindliche und nun abgetrennte Folienteil in Form der ersten eingehenden Folienbahn 4 (Fig. 3) wird nun zurück in die erste Folienzufuhr 6 (Fig. 1) eingezogen und ist folglich gemäß der Darstellung nach Fig. 4 aus dem Bereich der Spleißeinheit 8 entfernt. Es bleibt lediglich ein freies Ende 34 der ausgehenden Folienbahn 3 an der ersten Haltevorrichtung 12 haften.

Des Weiteren kommt nun auch die zweite Schneidvorrichtung 16 zum Einsatz. Analog zum oben beschriebenen Verfahrensschritt wird zunächst die zweite Haltevorrichtung 15 mit Vakuum beaufschlagt, so dass der entsprechende Bereich der zweiten eingehenden Folienbahn 5 flächig daran haftet bzw. gehalten wird. Unter Zwischenlage der zweiten eingehenden Folienbahn 5 wird nun die zweite Schneidvorrichtung 16 aktiviert, indem der Heizdraht aufgeheizt und gegen den zugeordneten Gegenhalter 23 verfahren wird. Folglich wird die zweite eingehende Folienbahn 5 entlang ihrer gesamten Breite durchtrennt, so dass ihr eingeklemmter Endabschnitt 21 abgetrennt und entlang des oben beschriebenen Federweges abgezogen wird. Der abgetrennte Endabschnitt 21 (Fig. 2) kann entnommen werden und ist damit entsprechend der Darstellung nach Fig. 4 aus dem Bereich der Spleißeinheit 8 entfernt. Es ist lediglich ein durch den Trennschnitt gebildetes freies Ende 35 der zweiten eingehenden Folienbahn 5 unmittelbar ausgangsseitig der zweiten Siegelbacke 14 an der zweiten Haltevorrichtung 15 gehalten.

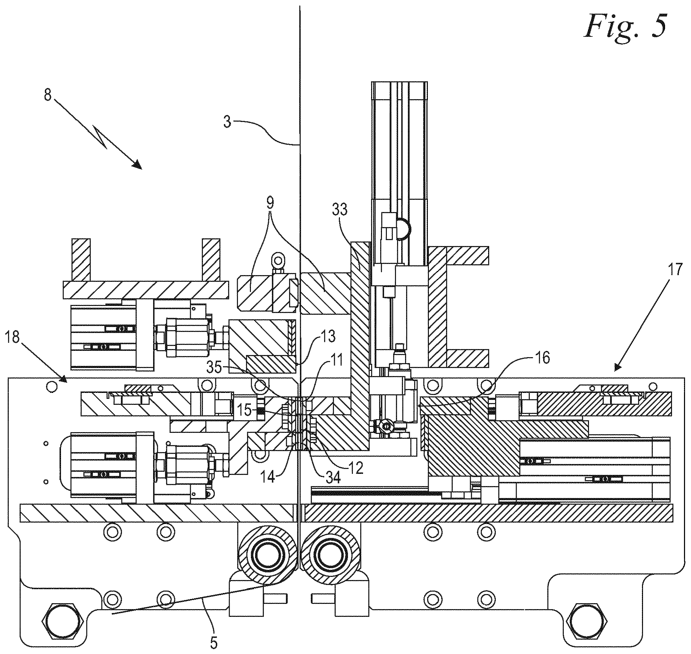

Nachdem nun der Vorbereitungszustand gemäß Fig. 4 erreicht ist, erfolgt eine Umkonfigurierung der Spleißeinheit 8 gemäß der Darstellung nach Fig. 5. Im vorangegangenen Zustand nach Fig. 4 befindet sich die erste Siegelbacke 11 mit der an der zugeordneten ersten Haltevorrichtung 12 gehaltenen und abgetrennten ausgehenden Folienbahn 3 noch im Wirkungsbereich ihrer zugeordneten ersten Schneidvorrichtung 13. Sinngemäß das Gleiche gilt auch für die zweite Siegelbacke 14 mit der ihr zugeordneten zweiten Haltevorrichtung 15 und der daran gehaltenen und abgetrennten zweiten eingehenden Folienbahn 5, welche sich im Wirkungsbereich der zugeordneten zweiten Schneidvorrichtung 16 befinden. Beim Übergang zur Konfiguration nach Fig. 5 findet nun ein relatives Verfahren zwischen der ersten Siegelbacke 11 mit der in ihrem Bereich gehaltenen ausgehenden Folienbahn 3 und der zweiten Siegelbacke 14 mit der in ihrem Bereich gehaltenen zweiten eingehenden Folienbahn 5 statt. Diese Relativbewegung führt dazu, dass sie aus dem Wirkungsbereich ihrer zugeordneten ersten und zweiten Schneidvorrichtungen 13, 16 entfernt werden und in ihren gegenseitigen Wirkungsbereich gelangen.

Im gezeigten Ausführungsbeispiel wird hierzu gemäß Fig. 5 zunächst der erste Vorbereitungstisch 17 aus der aktiven Betriebsposition heraus in die passive Vorbereitungsposition weggezogen, so dass die daran befindliche zweite Schneidvorrichtung 16 vom Bereich der zweiten Siegelbacke 14, der zweiten Haltevorrichtung 15 und dem daran gehaltenen Ende der zweiten eingehenden Folienbahn 5 entfernt wird. Anschließend wird der Träger 33 zusammen mit der Klemmeinheit 9 nach unten verfahren, wobei ein entsprechendes Stück der ausgehenden Folienbahn 3 aus dem Folienzwischenspeicher 19 (Fig. 1) zurückgezogen wird. Gemeinsam mit diesem Verfahrweg wird die Einheit aus der ersten Siegelbacke 11, der ersten Haltevorrichtung 12 und dem daran haftenden freien Ende 34 der ausgehenden Folienbahn 3 so weit nach unten gezogen, dass sie unmittelbar in Überdeckung mit der Einheit aus der zweiten Siegelbacke 14, der zweiten Haltevorrichtung 15 und dem daran haftenden freien Ende der zweiten eingehenden Folienbahn 5 zu liegen kommt.

In diesem in Fig. 5 dargestellten Zustand werden nun die beiden Siegelbacken 11, 14 aktiviert, so dass das freie Ende 35 der zweiten eingehenden Folienbahn 5 auf die ausgehende Folienbahn 3 und das freie Ende 34 der ausgehenden Folienbahn 3 auf die zweite eingehende Folienbahn 5 aufgesiegelt werden. Beide Siegelstellen liegen in einem geringen Abstand zueinander, so dass sich die freien Enden 34, 35 ein Stück weit überlappen, selbst jedoch dabei ohne nennenswerten Überstand fest aufgesiegelt sind. Es bleiben keine oder allenfalls technisch bedeutungslose freien Folienenden übrig, welche sich andernfalls im späteren Prozess als freie Folienschnipsel verselbständigen könnten.

Im gezeigten Ausführungsbeispiel liegen die beiden Siegelbacken 11, 14 in einem sich überlappenden Abstand zueinander. Es kann aber auch zweckmäßig sein, dass beide Siegelbacken 11, 14 unmittelbar aufeinander treffen, so dass nur eine durchgehende Siegelnaht entsteht. In diesem Falle kann es ausreichen, wenn nur eine der beiden Siegelbacken 11, 14 aufgeheizt wird, während die gegenüber liegende Siegelbacke thermisch passiv bleibt und lediglich als Gegenhalter wirkt.

Jedenfalls ist nun der Spleißvorgang insoweit beendet, als dass die zweite eingehende Folienbahn 5 mit ihrem freien Ende 35 an das freie Ende 34 der ausgehenden Folienbahn 3 angespleißt ist. Die Klemmeinheit 9 wird nun geöffnet. Die ausgehende Folienbahn 3 wird nun wieder im gewöhnlichen Betrieb aus der Vorrichtung 1 herausgezogen und der Maschine 2 (Fig. 1) zugeführt. Sobald die genannte Spleißstelle herausgezogen ist, wird nun die ausgehende Folienbahn 3 aus der zweiten Folienzufuhr 7 mit der entsprechenden zweiten eingehenden Folienbahn 5 gespeist. Im Übrigen werden noch der Träger 33 und der erste Vorbereitungstisch 17 aus ihrer Siegelposition nach Fig. 5 heraus und in ihrer gewöhnlichen Betriebsposition nach Fig. 3 zurückverfahren. Es ist nun die gleiche Ausgangssituation entstanden, wie sie im Zusammenhang mit den Fig. 1 und 2 weiter oben beschrieben wurde. Als Unterschied hat sich lediglich eingestellt, dass die ausgehende Folienbahn 3 nicht mehr aus der ersten Folienzufuhr 6, sondern aus der zweiten Folienzufuhr 7 abgezogen wird.

Sofern nun irgendwann der Vorrat in der zweiten Folienzufuhr 7 (Fig. 1) zur Neige geht, werden analog zur Darstellung nach Fig. 2 erneut Vorbereitungen für den nächsten Spleißvorgang durchgeführt, wozu Einzelheiten in Fig. 6 dargestellt sind: Hier bleibt der zweite Vorbereitungstisch 18 in seiner aktiven Betriebsposition, während der erste Vorbereitungstisch 17 nach außen in seine passive Vorbereitungsposition horizontal gezogen wird. Analog zur Darstellung nach Fig. 2 wird nun der Endabschnitt 21 der neu eingesetzten ersten eingehenden Folienbahn 5 an der Haltevorrichtung 19 eingeklemmt und unter Vorspannung gesetzt. Anschließend wird der erste Vorbereitungstisch 17 zurück in seine aktive Betriebsposition verfahren, so dass ein Betriebszustand analog zu Fig. 3 entsteht. Hiervon ausgehend wird nun analog zum vorstehend beschriebenen Verfahren der nächste Spleißvorgang durchgeführt mit dem einzigen Unterschied, dass nun ein freies Ende der ersten eingehenden Folienbahn 4 an das freie Ende 34 der ausgehenden Folienbahn 3 angespleißt wird. Durch wechselseitiges Anspleißen entweder der ersten eingehenden Folienbahn 4 oder der zweiten eingehenden Folienbahn 5 kann durchgehend und unterbrechungsfrei eine ausgehende Folienbahn 3 bereitgestellt werden, deren nur gelegentlich auftretenden Spleißstellen aufgrund ihrer Beschaffenheit einen auf ein Minimum reduzierten Einfluss auf die Weiterverarbeitung in der nachgeschalteten Maschine 2 (Fig. 1) haben.

## Patentansprüche

1. Vorrichtung (1) zum Spleißen und kontinuierlichen Bereitstellen einer ausgehenden Folienbahn (3), umfassend eine erste Folienzufuhr (6) zum Einspeisen einer ersten eingehenden Folienbahn (4), eine zweite Folienzufuhr (7) zum Einspeisen einer zweiten eingehenden Folienbahn (5), eine Spleißeinheit (8) zum Verspleißen der ersten oder der zweiten eingehenden Folienbahn (4, 5) mit der ausgehenden Folienbahn (3), sowie eine Klemmeinheit (9) und einen der Klemmeinheit (9) nachgeschalteten Folienzwischenspeicher (10) für die ausgehende Folienbahn (3), wobei die Spleißeinheit (8) eine erste Siegelbacke (11) mit einer ersten Haltevorrichtung (12) für die ausgehende Folienbahn (3) sowie eine erste Schneidvorrichtung (13) zum Abtrennen der ausgehenden Folienbahn (3) im Bereich der ersten Siegelbacke (11) umfasst,
**dadurch gekennzeichnet, dass** die Spleißeinheit (8) des Weiteren eine zweite Siegelbacke (14) mit einer zweiten Haltevorrichtung (15) wechselseitig für die erste oder die zweite eingehende Folienbahn (4, 5) sowie eine zweite Schneidvorrichtung (16) zum Abtrennen der ersten oder der zweiten eingehenden Folienbahn (4, 5) umfasst, wobei die erste Siegelbacke (11) mit der ersten Haltevorrichtung (12) und die zweite Siegelbacke (14) mit der zweiten Haltevorrichtung (15) relativ zueinander aus dem Wirkungsbereich ihrer ersten und zweiten Schneidvorrichtungen (13, 16) heraus in ihren gegenseitigen Wirkungsbereich verfahrbar sind.

2. Vorrichtung nach Anspruch 1,
**dadurch gekennzeichnet, dass** die erste Siegelbacke (11) mit der ersten Haltevorrichtung (12) und die zweite Schneidvorrichtung (16) wechselseitig in den Wirkungsbereich der zweiten Siegelbacke (14) mit der zweiten Haltevorrichtung (15) verfahrbar sind.

3. Vorrichtung nach Anspruch 1 oder 2,
**dadurch gekennzeichnet, dass** die Spleißeinheit (8) einen ersten Vorbereitungstisch (17) für die erste eingehende Folienbahn (4) sowie einen zweiten Vorbereitungstisch (18) für die zweite eingehende Folienbahn (5) aufweist, wobei der erste und der zweite Vorbereitungstisch (17, 18) zwischen einer aktiven Betriebsposition und einer passiven Vorbereitungsposition hin und her verfahrbar sind, wobei der erste und der zweite Vorbereitungstisch (17, 18) jeweils eine Haltevorrichtung (19) für einen freien Endabschnitt (21) der ersten oder der zweiten eingehenden Folienbahn (4, 5) sowie einen Trennbereich (20) zum Abtrennen des freien Endabschnitts (21) aufweisen, wobei im Trennbereich (20) des einen der beiden Vorbereitungstische (17, 18) die zweite Schneidvorrichtung (16) angeordnet ist, und wobei im Trennbereich (20) des anderen der beiden Vorbereitungstische (17, 18) ein Gegenhalter (23) für die zweite Schneidvorrichtung (16) sowie angrenzend daran die zweite Siegelbacke (14) mit der zweiten Haltevorrichtung (15) angeordnet sind.

4. Vorrichtung nach Anspruch 3,
**dadurch gekennzeichnet, dass** die Haltevorrichtung (19) für den freien Endabschnitt (21) gegen eine Federvorspannung relativ zum Trennbereich (20) verschiebbar ist.

5. Vorrichtung nach Anspruch 3 oder 4,
**dadurch gekennzeichnet, dass** die Vorbereitungstische (17, 18) horizontal verschiebbar gelagert sind, und dass die erste Siegelbacke (11) mit der ersten Haltevorrichtung (12) vertikal verschiebbar gelagert ist.

6. Vorrichtung nach einem der Ansprüche 1 bis 5,
**dadurch gekennzeichnet, dass** die erste und/oder die zweite Schneidvorrichtung (13, 16) durch einen Heizdraht gebildet ist.

7. Vorrichtung nach einem der Ansprüche 1 bis 6,
**dadurch gekennzeichnet, dass** die erste und/oder die zweite Haltevorrichtung (12, 15) durch eine Vakuumplatte gebildet ist.

8. Verfahren zum Betrieb einer Vorrichtung nach einem der Ansprüche 1 bis 7, umfassend folgende Verfahrensschritte:
- Im gewöhnlichen Betrieb wird eine der beiden eingehenden Folienbahnen (4, 5) kontinuierlich als ausgehende Folienbahn (3) durch den Folienzwischenspeicher (10) hindurch und aus der Vorrichtung (1) herausgeführt;
- Sobald erkannt wird, dass die eine der beiden eingehenden Folienbahnen (4, 5) zur Neige geht, wird die ausgehende Folienbahn (3) mittels der Klemmeinheit (9) fixiert und ausgangsseitig der Klemmeinheit (9) unter Entnahme aus dem Folienzwischenspeicher (10) aus der Vorrichtung (1) herausgeführt;
- Die ausgehende Folienbahn (3) wird mittels der ersten Haltevorrichtung (12) an der ersten Siegelbacke (11) gehalten und mittels der ersten Schneidvorrichtung (13) im Bereich der ersten Siegelbacke (11) abgetrennt;
- Die andere der beiden eingehenden Folienbahnen (5, 4) wird mittels der zweiten Haltevorrichtung (15) an der zweiten Siegelbacke (14) gehalten und mittels der zweiten Schneidvorrichtung (16) im Bereich der zweiten Siegelbacke (14) abgetrennt;
- Die erste Siegelbacke (11) mit der an der ersten Haltevorrichtung (12) gehaltenen und abgetrennten ausgehenden Folienbahn (3) sowie die zweite Siegelbacke (14) mit der an der zweiten Haltevorrichtung (15) gehaltenen und abgetrennten zweiten oder ersten eingehenden Folienbahn (5, 4) werden relativ zueinander aus dem Wirkungsbereich ihrer ersten und zweiten Schneidvorrichtungen (13, 16) heraus in ihren gegenseitigen Wirkungsbereich verfahren, und die abgetrennte zweite oder erste eingehende Folienbahn (5, 4) wird an die abgetrennte ausgehende Folienbahn (3) mittels der zusammenwirkenden Siegelbacken (11, 14) angespleißt;
- Die Klemmeinheit (9) wird wieder geöffnet, und der gewöhnliche Betrieb wird mit der gespleißten ausgehenden Folienbahn (3) fortgesetzt.

9. Verfahren nach Anspruch 8,
**dadurch gekennzeichnet, dass** die ausgehende Folienbahn (3) und die beiden eingehenden Folienbahnen (4, 5) wasserlöslich und insbesondere aus PVOH sind, und dass die ausgehende wasserlösliche Folienbahn (3) einer insbesondere kontinuierlich arbeitenden Maschine (2) zur Herstellung gefüllter wasserlöslicher Beutel zugeführt wird.

## Claims

1. Device (1) for splicing and continuously providing an outgoing film web (3), which device comprises a first film supply (6) for feeding in a first incoming film web (4), a second film supply (7) for feeding in a second incoming film web (5), a splicing unit (8) for splicing the first or the second incoming film web (4, 5) to the outgoing film web (3), and a clamping unit (9) and an intermediate film storage means (10), downstream of the clamping unit (9), for the outgoing film web (3), wherein the splicing unit (8) comprises a first sealing jaw (11) with a first holding device (12) for the outgoing film web (3), and a first cutting device (13) for severing the outgoing film web (3) in the region of the first sealing jaw (11),
**characterized in that** the splicing unit (8) furthermore comprises a second sealing jaw (14) with a second holding device (15) alternately for the first or the second incoming film web (4, 5), and a second cutting device (16) for severing the first or the second incoming film web (4, 5), wherein the first sealing jaw (11) with the first holding device (12) and the second sealing jaw (14) with the second holding device (15) can be displaced relative to one another out of the region of action of their first and second cutting devices (13, 16) into their mutual region of action.

2. Device according to Claim 1,
**characterized in that** the first sealing jaw (11) with the first holding device (12) and the second cutting device (16) can be displaced alternately into the region of action of the second sealing jaw (14) with the second holding device (15).

3. Device according to Claim 1 or 2,
**characterized in that** the splicing unit (8) has a first preparation table (17) for the first incoming film web (4) and a second preparation table (18) for the second incoming film web (5), wherein the first and the second preparation table (17, 18) can be displaced back and forth between an active operating position and a passive preparation position, wherein the first and the second preparation table (17, 18) have a respective holding device (19) for a free end portion (21) of the first or the second incoming film web (4, 5) and a severing region (20) for severing the free end portion (21), wherein the second cutting device (16) is arranged in the severing region (20) of the one of the two preparation tables (17, 18), and wherein a counter-holder (23) for the second cutting device (16) and, adjacent thereto, the second sealing jaw (14) with the second holding device (15) are arranged in the severing region (20) of the other of the two preparation tables (17, 18).

4. Device according to Claim 3,
**characterized in that** the holding device (19) for the free end portion (21) can be displaced relative to the severing region (20) counter to a spring pretension.

5. Device according to Claim 3 or 4,
**characterized in that** the preparation tables (17, 18) are mounted so as to be horizontally displaceable, and **in that** the first sealing jaw (11) with the first holding device (12) is mounted so as to be vertically displaceable.

6. Device according to one of Claims 1 to 5,
**characterized in that** the first and/or the second cutting device (13, 16) are/is formed by a heating wire.

7. Device according to one of Claims 1 to 6,
**characterized in that** the first and/or the second holding device (12, 15) are/is formed by a vacuum plate.

8. Method for operating a device according to one of Claims 1 to 7, comprising the following method steps:
- during normal operation, one of the two incoming film webs (4, 5) is guided continuously in the form of an outgoing film web (3) through the intermediate film storage means (10) and out of the device (1);
- as soon as it is detected that the one of the two incoming film webs (4, 5) is running low, the outgoing film web (3) is secured by means of the clamping unit (9) and guided out of the device (1) on the outlet side of the clamping unit (9) by being removed from the intermediate film storage means (10);
- the outgoing film web (3) is held on the first sealing jaw (11) by means of the first holding device (12) and severed in the region of the first sealing jaw (11) by means of the first cutting device (13);
- the other of the two incoming film webs (5, 4) is held on the second sealing jaw (14) by means of the second holding device (15) and severed in the region of the second sealing jaw (14) by means of the second cutting device (16);
- the first sealing jaw (11) with the severed outgoing film web (3) which is held on the first holding device (12) and the second sealing jaw (14) with the severed second or first incoming film web (5, 4) which is held on the second holding device (15) are displaced relative to one another out of the region of action of their first and second cutting devices (13, 16) into their mutual region of action, and the severed second or first incoming film web (5, 4) is spliced to the severed outgoing film web (3) by means of the interacting sealing jaws (11, 14);
- the clamping unit (9) is reopened and normal operation is continued with the spliced outgoing film web (3).

9. Method according to Claim 8,
**characterized in that** the outgoing film web (3) and the two incoming film webs (4, 5) are water-soluble and in particular made from PVOH, and **in that** the outgoing water-soluble film web (3) is supplied to an in particular continuously operating machine (2) for the production of filled water-soluble pouches.

## Revendications

1. Dispositif (1) destiné à raccorder et fournir en continu une bande de film sortante (3), ledit dispositif comprenant une première alimentation en film (6) destinée à alimenter une première bande de film entrante (4), une deuxième alimentation en film (7) destinée à alimenter une deuxième bande de film entrante (5), une unité de raccordement (8) destinée à raccorder la première ou la deuxième bande de film entrante (4, 5) à la bande de film sortante (3), ainsi qu'une unité de serrage (9) et un réservoir de film intermédiaire (10) monté en aval de l'unité de serrage (9) et destinée à la bande de film sortante (3), l'unité de raccordement (8) comprenant une première mâchoire de scellement (11) munie d'un premier dispositif de retenue (12) destiné à la bande de film sortante (3) et un premier dispositif de coupe (13) destiné à découper la bande de film sortante (3) dans la zone de la première mâchoire de scellement (11),
**caractérisé en ce que** l'unité de raccordement (8) comprend en outre une deuxième mâchoire de scellement (14) munie d'un deuxième dispositif de retenue (15) destiné alternativement à la première ou à la deuxième bande de film entrante (4, 5) et un deuxième dispositif de coupe (16) destiné à découper la première ou la deuxième bande de film entrante (4, 5), la première mâchoire de scellement (11) munie du premier dispositif de retenue (12) et la deuxième mâchoire de scellement (14) munie du deuxième dispositif de retenue (15) pouvant être déplacées l'une par rapport à l'autre à partir de la zone d'action de leurs premier et deuxième dispositifs de coupe (13, 16) jusque dans leur zone d'action mutuelle.

2. Dispositif selon la revendication 1,
**caractérisé en ce que** la première mâchoire de scellement (11) munie du premier dispositif de retenue (12) et le deuxième dispositif de coupe (16) peuvent être déplacés alternativement jusque dans la zone d'action de la deuxième mâchoire de scellement (14) munie du deuxième dispositif de retenue (15).

3. Dispositif selon la revendication 1 ou 2,
**caractérisé en ce que** l'unité de raccordement (8) comporte une première table de préparation (17) destinée à la première bande de film entrante (4) et une deuxième table de préparation (18) destinée à la deuxième bande de film entrante (5), les première et deuxième tables de préparation (17, 18) pouvant être déplacées suivant un mouvement alternatif entre une position de fonctionnement active et une position de préparation passive, les première et deuxième tables de préparation (17, 18) comportant chacune un dispositif de retenue (19) destiné à une portion d'extrémité libre (21) de la première ou de la deuxième bande de film entrante (4, 5) et une zone de séparation (20) destinée à séparer la portion d'extrémité libre (21), le deuxième dispositif de coupe (16) étant disposé dans la zone de séparation (20) de l'une des deux tables de préparation (17, 18), et un contre-support (23) destiné au deuxième dispositif de coupe (16) et, de manière adjacente à celui-ci, la deuxième mâchoire de scellement (14) munie du deuxième dispositif de retenue (15) étant disposée dans la zone de séparation (20) de l'autre des deux tables de préparation (17, 18).

4. Dispositif selon la revendication 3,
**caractérisé en ce que** le dispositif de retenue (19) destiné à la portion d'extrémité libre (21) peut être déplacé par rapport à la zone de séparation (20) en s'opposant à une précontrainte de ressort.

5. Dispositif selon la revendication 3 ou 4,
**caractérisé en ce que** les tables de préparation (17, 18) sont montées de manière à pouvoir coulisser horizontalement et **en ce que** la première mâchoire de scellement (11) munie du premier dispositif de retenue (12) est montée de manière à pouvoir coulisser verticalement.

6. Dispositif selon l'une des revendications 1 à 5,
**caractérisé en ce que** le premier et/ou le deuxième dispositif de coupe (13, 16) sont formés par un fil chauffant.

7. Dispositif selon l'une des revendications 1 à 6,
**caractérisé en ce que** le premier et/ou le deuxième dispositif de retenue (12, 15) sont formés par une plaque à vide.

8. Procédé destiné à faire fonctionner un dispositif selon l'une des revendications 1 à 7, ledit procédé comprenant les étapes suivantes :
- en fonctionnement normal, l'une des deux bandes de film entrantes (4, 5) est guidée en continu à travers le réservoir de film intermédiaire (10) et hors du dispositif (1) en tant que bande de film sortante (3) ;
- dès que l'une des deux bandes de film entrantes (4, 5) est détectée comme étant presque vide, la bande de film sortante (3) est fixée au moyen de l'unité de serrage (9) et est guidée hors du dispositif (1) en étant retirée du réservoir de film intermédiaire (10) du côté sortie de l'unité de serrage (9) ;
- la bande de film sortante (3) est maintenue sur la première mâchoire de scellement (11) au moyen du premier dispositif de retenue (12) et est séparée dans la zone de la première mâchoire de scellement (11) au moyen du premier dispositif de coupe (13) ;
- l'autre des deux bandes de film entrantes (5, 4) est maintenue sur la deuxième mâchoire de scellement (14) au moyen du deuxième dispositif de retenue (15) et est séparée dans la zone de la deuxième mâchoire de scellement (14) au moyen du deuxième dispositif de coupe (16) ;
- la première mâchoire de scellement (11) munie de la bande de film sortante (3) maintenue et séparée sur le premier dispositif de retenue (12) et la deuxième mâchoire de scellement (14) munie de la deuxième ou première bande de film entrante (5, 4) maintenue et séparée sur le deuxième dispositif de retenue (15) sont déplacées l'une par rapport à l'autre depuis la zone d'action de leurs premier et deuxième dispositifs de coupe (13, 16) jusque dans leur zone d'action mutuelle, et la deuxième ou la première bande de film entrante séparée (5, 4) est raccordée à la bande de film sortante séparée (3) au moyen des mâchoires de scellement (11, 14) qui coopèrent l'une avec l'autre ;
- l'unité de serrage (9) est à nouveau ouverte et le fonctionnement normal est poursuivi avec la bande de film sortante raccordée (3).

9. Procédé selon la revendication 8,
**caractérisé en ce que** la bande de film sortante (3) et les deux bandes de film entrantes (4, 5) sont solubles dans l'eau et en particulier sont en PVOH, et **en ce que** la bande de film sortante (3) soluble dans l'eau est amenée à une machine (2) travaillant notamment en continu et destinée à produire des sacs remplis solubles dans l'eau.
